# EUROPEAN PATENT APPLICATION

(11) **EP 4 489 198 A1**
(43) Date of publication of application: **08.01.2025**
(21) Application number: 22928966.5
(22) Date of filing: 23.12.2022
(51) Int. Cl.: H01M 50/213, H01M 50/289, H01M 50/291

(54) **BATTERY PACK**

(30) Priority: 28.02.2022 JP 2022030318
(71) Applicant: Panasonic Energy Co., Ltd., Osaka 570-8511 (JP)
(72) Inventor: FUKUDA, Shinsuke, Kadoma-shi, Osaka 571-0057 (JP)
(74) Representative: Novagraaf International SA
(86) International application number: PCT/JP2022/047564
(87) International publication number: WO 2023/162450

(57) **Abstract**

A battery pack in one aspect of the present disclosure includes: secondary battery cells each having a cylindrical shape and including a first contact area and a second contact area which are on a side surface of the cylindrical shape thereof and which are different from each other; a rod body having a rod shape extending in one direction, the rod body has a side surface, a part of the side surface of the rod body contacting the first contact area of each secondary battery cells; and a housing having a storage space therein that accommodating the secondary battery cells and the rod body therein, a part of an inner surface of the storage space contacting the second contact area of the each secondary battery cell. While the secondary battery cells and the rod body are accommodated in the storage space of the housing, at least one of the secondary battery cells is held at the first contact area of the at least one secondary battery cell which contacts a part of the side surface of the rod body and at the second contact area of the at least one secondary battery cell which contacts a part of the inner surface of the storage space of the housing.

## Description

### TECHNICAL FIELD

The present disclosure relates to a battery pack.

### BACKGROUND ART

Battery packs including secondary battery cells connected in series and parallel to one another are used as power sources for electric power-assisted bicycles, and power sources for portable electrically driven devices, such as electric cleaners and electric power tools. The battery packs are also used, as stationary power storage batteries, for backup power sources for servers, and home-use power supply devices, office-use power supply devices and factory-use power supply devices. Further, the battery packs are also used as power sources for driving vehicles, such as electric scooters, electric carts, hybrid automobiles, and electric automobiles. In these battery packs, the secondary battery cells are encased and aligned in a cell holder. The cell holder has cylindrical spaces each of which accommodates a corresponding one of the secondary battery cells. The battery cells respectively inserted in the cylindrical spaces in the cell holder are separated and electrically insulated from one another by partition walls each intervening between adjacent secondary battery cells. (see, e.g., PTL 1).

### CITATION LIST

### Patent Literature

PTL 1: International Publication No. 2019/208217

### SUMMARY OF INVENTION

A battery pack in accordance with one aspect of the present disclosure includes: a plurality of secondary battery cells, each of the plurality of second battery cells having a cylindrical shape and including a first contact area and a second contact area which are on a side surface of the cylindrical shape thereof and which are different from each other; at least one rod body having a rod shape extending in one direction, the at least one rod body has a side surface, a part of the side surface of the at least one rod body contacting the first contact area of the each of the plurality of secondary battery cells; and a housing having a storage space therein that accommodating the plurality of secondary battery cells and the at least one rod body therein, a part of an inner surface of the storage space contacting the second contact area of the each of the plurality of secondary battery cells. While the plurality of secondary battery cells and the at least one rod body are accommodated in the storage space of the housing, at least one of the plurality of secondary battery cells is held at the first contact area of the at least one of the plurality of secondary battery cells which contacts a part of the side surface of the at least one rod body and at the second contact area of the at least one of the plurality of secondary battery cells which contacts a part of the inner surface of the storage space of the housing.

The battery pack in one aspect of the present disclosure eliminates the necessity of the cell partition walls used in the conventional battery holder having the complicated structure, and instead to hold the secondary battery cells with a simple structure with the rod body.

### BRIEF DESCRIPTION OF DRAWINGS

FIG. 1 is a perspective view of a battery pack according to Exemplary Embodiment 1.
FIG. 2 is an exploded perspective view of the battery pack shown in FIG. 1.
FIG. 3 is a cross sectional view of the battery pack along a line III-III shown in FIG. 1.
FIG. 4 is a perspective view of a rod body of a battery pack according to Exemplary Embodiment 2.
FIG. 5 is a cross sectional view of the battery pack according to Embodiment 2.
FIG. 6 is a perspective view of a rod body of a battery pack according to Exemplary Embodiment 3.
FIG. 7 is an exploded perspective view of the rod body shown in FIG. 6.
FIG. 8 is a cross sectional view of the battery pack according to Embodiment 3.
FIG. 9 is a perspective view of a rod body of a battery pack according to Exemplary Embodiment 4.
FIG. 10 is a cross sectional view of the battery pack according to Embodiment 4.
FIG. 11 is an exploded perspective view of a battery pack according to Exemplary Embodiment 5.
FIG. 12 is an exploded perspective view of a battery pack according to Exemplary Embodiment 6.
FIG. 13 is a perspective view of the rod body shown in FIG. 12.
FIG. 14 is an exploded perspective view of the rod body shown in FIG. 13.
FIG. 15 is a cross sectional view of the battery pack according to Embodiment 6 with an enlarged view of a principal part thereof.
FIG. 16 is a cross sectional view of a battery pack according to Exemplary Embodiment 7.
FIG. 17 is an exploded perspective view of a battery pack according to Exemplary Embodiment 8.
FIG. 18 is an exploded perspective view of a battery pack of a comparative example.
FIG. 19 is a cross sectional view of the battery pack shown in FIG. 18.

### DESCRIPTION OF EMBODIMENT

In the conventional battery pack described above, the cell holder has cylindrical hollows each having a cylindrical shape along outer shapes of the secondary battery cells. When a secondary battery cell is inserted in the hollow in the cell holder, the remaining molded portions of the cell holder exist as partition walls each isolating the adjacent secondary battery cells from each other. This structure is regarded as an aggregate of thin pipes each having a bottom and an inner diameter that is slightly larger than the outer diameter of the secondary battery cell. Further, each pipe is provided on its bottom with holes through which lead plates for connecting the secondary battery cells in parallel or series to one another are welded. Such cell holders were complicated in structure and thus being produced by a troublesome molding process.

Further, when it is required to reduce the size of the battery pack using the above-described cell holder, it is necessary to align the secondary battery cells with gaps as small as possible, or reduce the distance between each adjacent secondary battery cells to be as small as possible. For that purpose, it is necessary to reduce the thickness of each thin pipe having a bottom. However, the thickness of the thin pipe cannot be made thinner than a limit thickness due to the restrictions of the molding.

However, to remove the cell partition walls of the cell holder, on the other hand, means to lose such an advantageous function of the cell holder that makes the cell arrangement easy so that the battery pack can be easily assembled. As another configuration, it may be possible to remove the cell partition walls, and align cells each being wound with an insulating material without intervening gaps. However, this configuration does not have any cell partition walls that function as fireproof walls. Accordingly, if by any chance an unspecified secondary battery cell bursts into flames and generates heat due to an internal short-circuiting or the like, there is a fear that the flame and heat would be transmitted to the adjacent secondary battery cells, so that the adjacent secondary battery cells would also catch fire.

A battery pack in accordance with one aspect of the present disclosure includes: a plurality of secondary battery cells, each of the plurality of second battery cells having a cylindrical shape and including a first contact area and a second contact area which are on a side surface of the cylindrical shape thereof and which are different from each other; at least one rod body having a rod shape extending in one direction, the at least one rod body has a side surface, a part of the side surface of the at least one rod body contacting the first contact area of the each of the plurality of secondary battery cells; and a housing having a storage space therein that accommodating the plurality of secondary battery cells and the at least one rod body therein, a part of an inner surface of the storage space contacting the second contact area of the each of the plurality of secondary battery cells. While the plurality of secondary battery cells and the at least one rod body are accommodated in the storage space of the housing, at least one of the plurality of secondary battery cells is held at the first contact area of the at least one of the plurality of secondary battery cells which contacts a part of the side surface of the at least one rod body and at the second contact area of the at least one of the plurality of secondary battery cells which contacts a part of the inner surface of the storage space of the housing.

Aspects of the present disclosure may be identified by the following configurations and features.

In a battery pack in accordance with another aspect of the present disclosure, according to the above-described aspect, the at least one of the plurality of secondary battery cells may be disposed such that the first contact area of the at least one of the plurality of secondary battery cells is opposite to the second contact area of the at least one of the plurality of secondary battery cells across a center of a circular cross section of the at least one of the plurality of secondary battery cells. This configuration allows the side surface of the cylindrical secondary battery cell to be stably held by being supported from the both sides.

In a battery pack in accordance with still another aspect of the present disclosure, according to any one of the above-described aspects, the at least one rod body may include a concave portion on the side surface of the rod shape contacting the first contact area, the concave portion being curved inwards along a shape of a cylindrical side surface of the at least one of the plurality of secondary battery cells. This configuration allows the cylindrical secondary battery cell to be stably held by the concave portion curved inward along the outer shape of the cylindrical side surface of the secondary battery cell.

In a battery pack in accordance with still another aspect of the present disclosure, according to any one of the above-described aspects, the at least one rod body may have a plurality of concave portions on the side surface of the at least one rod body, a corresponding one of plurality of concave portions contacting the first contact area of the each of the plurality of secondary battery cells, the corresponding one of the plurality of concave portions being curved inward along a shape of a cylindrical side surface of the each of the plurality of secondary battery cells. The plurality of concave portions may be arranged at constant intervals along a circumference of a cross section of the at least one rod body.

In a battery pack in accordance with still another aspect of the present disclosure, according to any one of the above-described aspects, a part of the inner surface of the storage space of the housing contacting the second contact area of the at least one of the plurality of secondary battery cells may have a curved surface curved along the cylindrical side surface of the at least one of the plurality of secondary battery cells.

In a battery pack in accordance with still another aspect of the present disclosure, according to any one of the above-described aspects, the housing may have a tubular shape extending in a longitudinal direction of the plurality of secondary battery cells and having an open end. The battery pack may further include an end plate closing the open end of the housing. This configuration allows the end of the secondary battery cell to be stably held by the end plate.

In a battery pack in accordance with still another aspect of the present disclosure, according to any one of the above-described aspects, the end plate may include: a rod fixing portion holding the at least one rod body; and a plurality of engaging recesses engaged with ends of the plurality of secondary battery cells to hold the plurality of secondary battery cells, respectively.

In a battery pack in accordance with still another aspect of the present disclosure, according to any one of the above-described aspects, the at least one rod body may be formed unitarily with the end plate.

In a battery pack in accordance with still another aspect of the present disclosure, according to any one of the above-described aspects, the at least one rod body may include a protrusion engaged with the end plate. The end plate may include a rod fixing portion engaged with the protrusion of the at least one rod body. the protrusion of the at least one rod body may have a cross section asymmetrical about a center of the cross section.

A battery pack in accordance with still another aspect of the present disclosure, according to any one of the above-described aspects, may further include a partition plate provided on the at least one rod body, the at least one rod body being inserted between adjacent battery cells out of the plurality of secondary battery cells adjacent to each other across respective side surfaces of the adjacent battery cells. This configuration isolates the adjacent secondary battery cells from each other by the partition plate. Therefore, even if by any chance a secondary battery cell bursts into flames due to an internal short-circuiting or the like, the partition plate functions as a fireproof wall to prevent the adjacent secondary battery cell from being attacked by the flames. Further, even if a secondary battery cell is heated to be a high temperature, the partition plate functions as a heat-insulating plate to prevent the high temperature heat from being transmitted to the adjacent secondary battery cell.

In a battery pack in accordance with still another aspect of the present disclosure may be configured, according to any one of the above-described aspects, the partition plate may have a slit therein holding the side surface of the at least one rod body in the slit. The at least one rod body may have a groove in which an end of the partition plate at the slit is inserted. This configuration provides a holding structure for holding the plurality of secondary battery cells so that the secondary battery cells are separated from one another with a simple structure of combining the partition plate and the rod body in place of the conventional cell holder.

In a battery pack in accordance with still another aspect of the present disclosure, according to any one of the above-described aspects, while the plurality of secondary battery cells are accommodated in the storage space of the housing, at least half a circumference length of a cross section of the each of the plurality of secondary battery cells may contact the inner surface of the storage space of the housing as the second contact area.

In a battery pack in accordance with still another aspect of the present disclosure, according to any one of the above-described aspects, three or more secondary battery cells out of the plurality of secondary battery cells may be arranged adjacent to one another. The at least one rod body may be surrounded by the three or more secondary battery cells and holds the three or more secondary battery cells with the side surface of the at least one rod body. In this configuration, the rod body is disposed in a space formed by combining the three or more secondary battery cells to hold the three or more secondary battery cells by efficiently using the space.

In a battery pack in accordance with still another aspect of the present disclosure, according to any one of the above-described aspects, each of all the plurality of secondary battery cells may be held at the first contact area contacting the side surface of the at least one rod body and at the second contact area contacting the inner surface of the storage space of the housing.

In a battery pack in accordance with still another aspect of the present disclosure, according to any one of the above-described aspects, the at least one rod body comprises a plurality of rod bodies including one rod body and another rod body. One secondary battery cell out of the plurality of secondary battery cells may be held at the first contact area contacting a part of a side surface of the one rod body and at the second contact area contacting a part of the inner surface of the storage space of the housing. Another secondary battery cell out of the plurality of secondary battery cells may be held at the first contact area contacting a part of the side surface of the one rod body and at a third contact area contacting a part of a side surface of the another rod body.

A battery pack in accordance with still another aspect of the present disclosure includes: a plurality of secondary battery cells, each of the plurality of second battery cells having a cylindrical shape and including a first contact area and a third contact area which are on a side surface of the cylindrical shape thereof and which are different from each other; and rod bodies having rod shapes extending in one direction, the rod bodies have side surfaces contacting the first contact area of the each of the plurality of secondary battery cells. While the plurality of secondary battery cells are held by the rod bodies, one of the plurality of secondary battery cells may be held at the first contact area which contacts a part of a side surface of one of the rod bodies and at the third contact area which contacts a part of a side surface of another of the rod bodies. In this configuration, the secondary battery cells are held in a simple structure using the rod bodies, without using a conventional battery holder, which is provided with hollowed-out recesses each having a cylindrical shape corresponding to the outer shape of the secondary battery cell.

In a battery pack in accordance with still another aspect of the present disclosure, according to any one of the above-described aspects, the rod body may be made of a heat insulating material. In this configuration, even if one of the secondary battery cells is heated, the secondary battery cells are held by the rod body.

In a battery pack in accordance with still another aspect of the present disclosure, according to any one of the above-described aspects, the rod body may be a rod or pipe made of a high heat resistant thermoplastic or thermosetting resin, a ceramic, an insulated metal, or a carbon fiber.

In a battery pack in accordance with still another aspect of the present disclosure, according to any one of the above-described aspects, the rod body as a whole or at least at the part contacting the side surface of the secondary battery cell may be made of a material that has a small thermal conductivity.

The present disclosure will be described below with reference to the drawings. Exemplary embodiments described hereinafter show examples embodying the technical idea of the present invention, and are not intended to limit the present invention to the following embodiments. The present specification is not intended to limit the elements described in the claims to the elements of the exemplary embodiments. Particularly, dimensions, materials, shapes, relative arrangements, and the like of the structural components described in the exemplary embodiments are not intended to limit the scope of the present invention to those components unless otherwise specifically described so, and are merely explanatory examples. Also, sizes and positional relations of the members shown in the drawings may sometimes be exaggerated to clarify the explanation. Also, in the following description, like names and like reference marks will indicate like or similar members, and detailed explanation on them will occasionally be omitted. Also, each elements configuring the present disclosure may be such that plural elements are configured by a single member and the single member performs the functions of the plural elements. On the contrary, a function of a single member may be shared by plural members.

A battery pack of the present disclosure may be used as a power source for portable electrically driven devices, such as electric cleaners and electric power tools; or as a stationary power storage battery, such as a backup power source for servers, and home-use power supply devices, office-use power supply devices or factory-use power supply devices; or as a power source for the electric power-assisted bicycles; or as a power source for driving vehicles, such as electric scooters, electric carts, hybrid automobiles, and electric automobiles. As an exemplary embodiment of the present disclosure, a battery pack for an electric power-assisted bicycle will be described below.

### Exemplary Embodiment 1

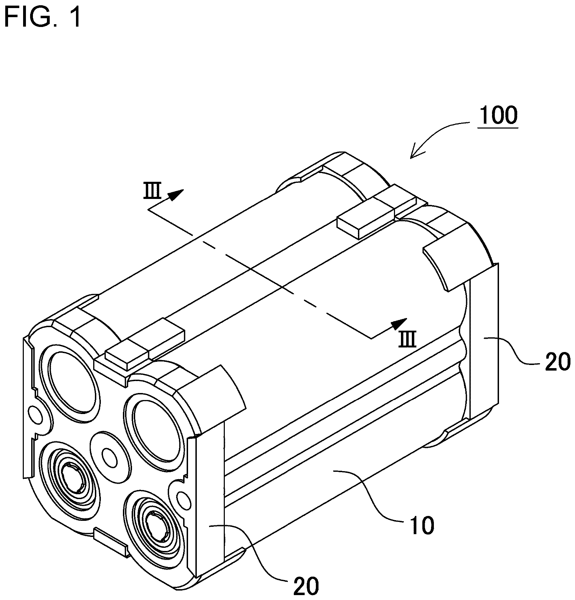

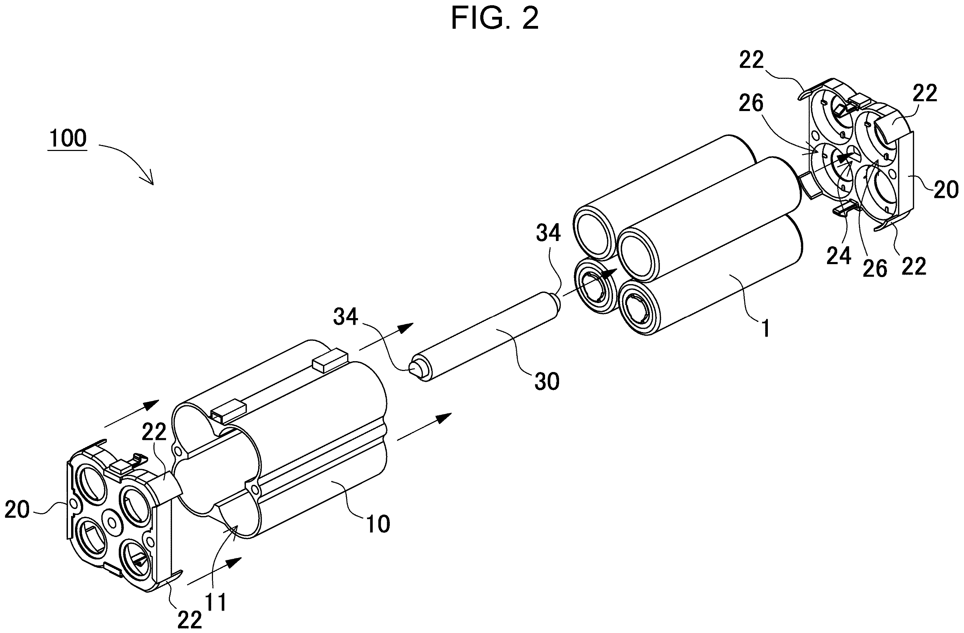

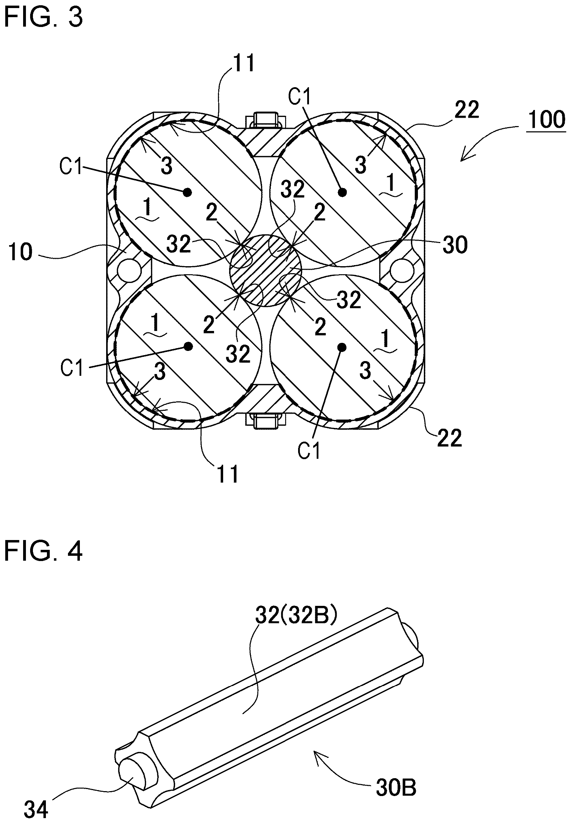

A battery pack 100 according to Exemplary Embodiment 1 of the present disclosure is shown in FIGS. 1-3. FIG. 1 is an exterior perspective view of the battery pack 100 according to Embodiment 1. FIG. 2 is an exploded perspective view of the battery pack 100 shown in FIG. 1. FIG. 3 is a cross sectional view of the battery pack 100 along a line III-III shown in FIG. 1. The battery pack 100 shown in these figures includes secondary battery cells 1, a rod body 30, a housing 10, and end plates 20.

### Housing 10

The housing 10 has a rod shape extending in a longitudinal direction of the secondary battery cells 1. The housing 10 has a tubular shape having a hollow space as a storage space to accommodate the secondary battery cells 1 and the rod body 30 therein. In the example shown in FIGS. 1-3, four cylindrical secondary battery cells 1 are accommodated. The housing 10 has a box shape with an elongated shape depending on the number and arrangement of the stored secondary battery cells 1. That is, the number of the secondary battery cells accommodated in the housing 10 may be three or less or may be five or more. The secondary battery cells 1 may be arranged in a matrix of 2 rows and 2 columns when viewed from end surfaces of the batteries as shown in FIG. 3. However, the number of rows and columns of the matrix may be changed. The adjacent secondary battery cells may be arranged in a staggered pattern or in an offset pattern (concrete examples of these pattern will be described later).

The inner surface of the housing 10 is a curved surface along the outer surfaces of the external cans of the secondary battery cells 1. While the secondary battery cells 1 are inserted in the storage space in the housing 10, the inner surface of the housing 10 partially contacts exterior cans of the secondary battery cells 1. The part of the inner surface of the housing 10 that partially contacts an exterior can of a secondary battery cell 1 is referred to as a housing contact area 11. In the example shown in FIG. 3, the housing contact area 11 is indicated by a thick broken line. Tn the state shown in this example, four secondary battery cells 1 are inserted in the storage space. In this state, a half or more of a circumference length of a cross section of each secondary battery cell 1 constitute the housing contact area 11 contacting the inner surface of the housing 10. The housing 10 the configured this may be made of a material, such as a polycarbonate resin or an ABS resin, which has a superior insulation.

### Secondary Battery Cell 1

Each secondary battery cell 1 is a cylindrical secondary battery cell including an exterior can with a cylindrical shape. The cylindrical secondary battery cell has terminal surfaces at both end surfaces thereof. One of the terminal surfaces is provided with a safety valve. The safety valve is configured to open in response to an excessive increase in an inner pressure of the exterior can to release inner gas. Although the safety valve is often provided on the positive electrode side, the present disclosure is not intended to limit the position of placing the safety valve, and the safety valve may be provided on another position, such as a position on the negative electrode side.

As the secondary battery cell 1, a cylindrical lithium-ion secondary battery may preferably be used. However, the battery pack of the present disclosure may not be limited to the cylindrical battery, and also may not be limited to the lithium-ion secondary battery. The secondary battery cell may be any battery that can be charged, such, for example, as the nickel metal hydride battery or the nickel-cadmium battery.

Each secondary battery cell 1 is held by the side surface of the rod body 30 and the inner surface of the storage space of the housing 10. An area of the side surface of the cylindrical secondary battery cell 1 and contacting a part of the side surface of the rod body 30 is referred to as a first contact area 2. An area which of the side surface of the cylindrical secondary battery cell 1 different from the first contact area 2 and contacting a part of the inner surface of the storage space in the housing 10 is referred to as a second contact area 3.

### Rod Body 30

The rod body 30 is disposed between adjacent secondary battery cells 1. The rod body 30 has an elongated rod shape extended in one direction. Each of the secondary battery cells 1 is placed along the longitudinal direction of the rod body 30 so that exterior cans of the secondary battery cells 1 contact the side surface of the rod body 30. That is, a part of the side surface of the rod shape contacts the first contact area 1 of the secondary battery cell 1. Here, the part of the rod body 30 contacting the first contact area 2 of a secondary battery cell 1 is referred to as a rod-body contact area 32. In the example shown in FIG. 3, each of four areas including the upper right, lower right, lower left and upper left of a circular cross section of the rod body 30 is the rod-body contact area 32 contacting the first contact area 2 of secondary battery cell 1. Rod-body contact areas 32 may be preferably arranged at constant intervals along the circumferential direction on the cross section of the rod shape. In this arrangement, secondary battery cells 1 are arranged in a balanced fashion.

The rod-body contact area 32 may preferably be oppose to the housing contact area 11 across a center C1 of a circular cross section of the cylindrical secondary battery cell 1 as shown in FIG. 3. In other words, the first contact area 2 is opposite to the second contact area 3 of the secondary battery cell 1 across the center C1 of the circular cross-section of the cylindrical secondary battery cell 1. In this configuration, the cylindrical secondary battery cell 1 is supported at opposite positions on the side surface, thereby being held stably. Particularly, in a battery pack that does not use a cell holder which covers the entire side surface of the secondary battery cell 1, the secondary battery cell 1 is stably held even in the battery pack contacting the secondary battery cell 1 in a narrow area.

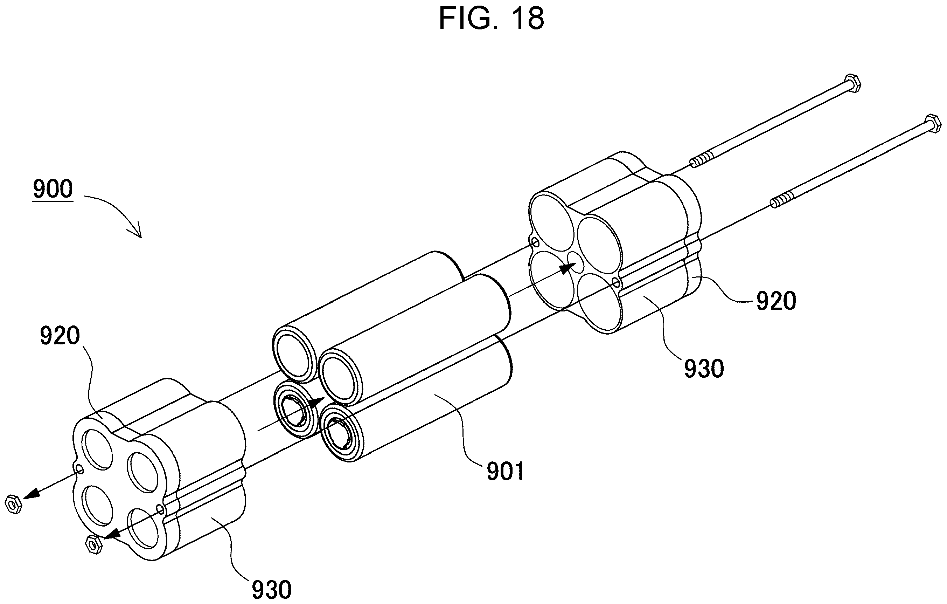

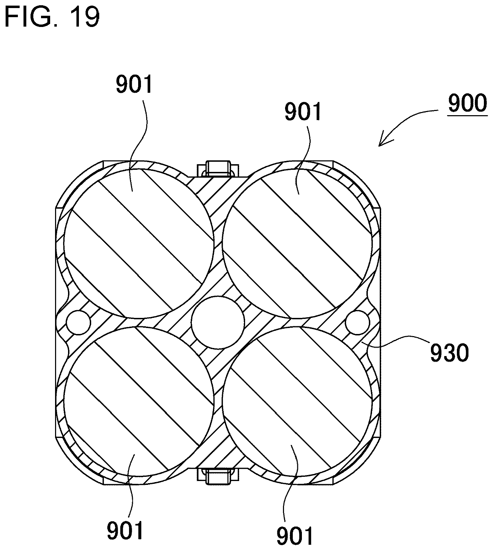

In battery pack 900 of the comparative example, as shown by an exploded perspective view in FIG. 18 and a cross-sectional view in FIG. 19, the side surface of the secondary battery cell 901 is covered with two divided cell holders 930. Each cell holder 930 is formed unitarily with an end plate 920. In this configuration, each cell holder 930 is required to have a cylindrical hole therein corresponding to the outer shape of the secondary battery cell 901, so that the molding process is complicated, and the configuration is complicated.

The battery pack 100 according to Embodiment 1, on the other hand, holds the secondary battery cell 1 without the above-described cell holder by arranging the secondary battery cells 1 around the rod body 30 and holding the secondary battery cells 1 between the rod body 30 and the housing 10 as shown in FIG. 2. This configuration may not necessarily use the cell holder having a complicated structure, so that the battery pack may have a simple structure to be easily produced.

Further, this configuration contributes to a small size of the battery pack. The battery pack may have a small size by reducing the distance between adjacent secondary battery cells, or reducing the thickness of the cell partition walls of the cell holder which separate the secondary battery cells from one another. However, since the cell holder is often produced by resin molding, the wall thickness is hardly smaller than an allowable limit. Further, difficulty in molding the cell partition walls increases as the number of cells stored in the cell holder increases.

On the other hand, the battery pack 100 according to Embodiment 1 which does not use the cell holder having the cell partition walls is not subjected to the restriction regarding the molding of the partition walls, thus having advantageous in its small size.

### End Plate 20

The housing 10 opens at both ends thereof, as shown in FIG. 2. Each of the open ends of the housing 10 is closed by an end plate 20. Each end plate 20 is provided on its periphery with claws 22 to be engaged with or press-fitted to the housing 10 so as to be connected to the housing 10. The end plate 20 holds a lead plate which electrically connects electrodes of the secondary battery cells 1 to one another. The secondary battery cells 1 are connected in series or parallel to one another through the lead plate. The lead plate may be made of a metal plate and welded to the secondary battery cells 1. The end plate 20 may include a lead positioning guide therein along the outer shape of the lead plate to place the lead plate in a predetermined position. The lead plate may be disposed on either an inner surface or an outer surface of the end plate. In the case that the lead plate is disposed on the outer surface of the end plate 20, the secondary battery cells are inserted into the storage space of the housing, and then the lead plate is fixed to the terminal surfaces of the secondary battery cells exposed from the housing.

Each end plate 20 further includes a rod fixing portion 24 that holds the rod body 30 and engaging recesses 26 each of which is engaged with an end of secondary battery cell 1 to hold the secondary battery cell 1. In this configuration, an end of each of the secondary battery cells 1 is stably held by the end plate 20. In the example shown in FIG. 2, the end plate 20 has a rod fixing hole formed in the center of the end plate 20 as the rod fixing portion 24. The rod body 30 is provided at each of its ends with a protrusion 34 corresponding to the rod fixing hole. The protrusions 34 are respectively inserted into the rod fixing holes of the end plates 20 to fix the rod body 30 with the end plates 20 at the both ends in the longitudinal direction of the rod body 30.

The protrusion 34 may preferably be formed so that the shape of a cross section of the protrusion is asymmetrical about a center of the cross section. Protrusion 34 having a point symmetrical cross section (e.g., a circular column shape) allows the rod body 30 to rotate about the axial direction. Therefore, the protrusion 34 has a shape asymmetrical about the center of the cross section to prevent the rotation. In the example shown in FIG. 2, a part of the circular column shape (a part of the bottom surface in the figure) has been cut out to be a flat surface (an orientation flat surface). On the other hand, the rod fixing portion 24 also has a shape made by cutting a part of a circular shape correspondingly to the shape of the protrusion 34. The shape of the protrusion 34 may not be limited to the above-described D-cut shape, and may be a prismatic shape or a polygonal shape.

The rod body 30 may be preferably made of a material having a heat resistance. This configuration allows the rod body 30 to keep holding the secondary battery cells 1 even when the secondary battery cells 1 generate heat. Materials usable for such rod body 30 include, for example, thermosetting resins and ceramics.

The entire part of the rod body 30 or at least the rod-body contact area 32 of the rod body 30 may be made of a material with a small thermal conductivity. Even when one of the secondary battery cells 1 generates heat, rod body 30 suppresses propagation of high temperature heat through the rod body 30, accordingly reducing the risk of causing a spreading fire. Such structure may be produced, for example, by winding a thermal insulating material superior in fire resistance and heat resistance on the outer surface of the rod body 30.

### Exemplary Embodiment 2

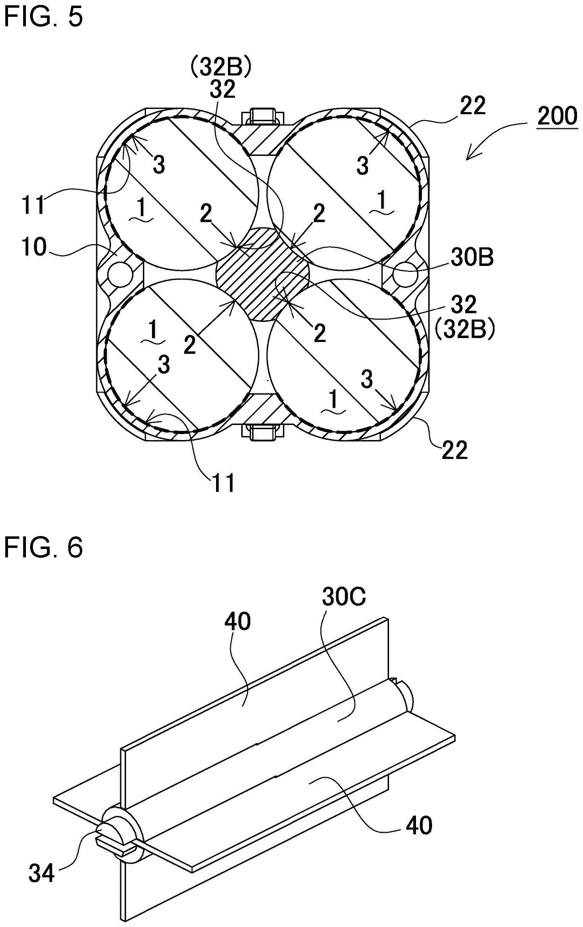

The rod body 30 of the battery pack 100 according to Embodiment 1 has a cylindrical outer shape. However, the present disclosure may not be limited to such configuration, and the rod-body contact area of the rod body may be modified depending on the shape of the cylindrical side surface of the secondary battery cell. An example of such modification is shown in FIGS. 4 and 5 as a battery pack 200 according to Exemplary Embodiment 2. FIG. 4 is a perspective view of a rod body 30B of the battery pack 200 according to Embodiment 2. FIG. 5 is a cross sectional view of the battery pack 200 according to Embodiment 2. In these figures, components commonly identical to each other in Embodiments 1 and 2 are denoted by the same reference numerals, and their detailed explanation will be omitted.

In the rod body 30B shown in FIG. 4, the rod-body contact area 32 which is a part of the side surface of the rod shape and contacts the first contact area 2 of a secondary battery cell 1 is a concave portion 32B curved inward with a shape corresponding to the shape of the cylindrical side surface of the secondary battery cell 1. In the rod-body contact area 32 not with simply a circular columnar shape but with the concave portion 32B curved along the outer shape of the cylindrical side surface of the secondary battery cell 1, the contact area of the second battery cell 1 and the rod body 30B is not a line contact area, but is a surface contact area to secure a wider contact area. Accordingly, even the cylindrical secondary battery cell 1 which has a smooth side surface without any engageable area is stably held.

### Exemplary Embodiment 3

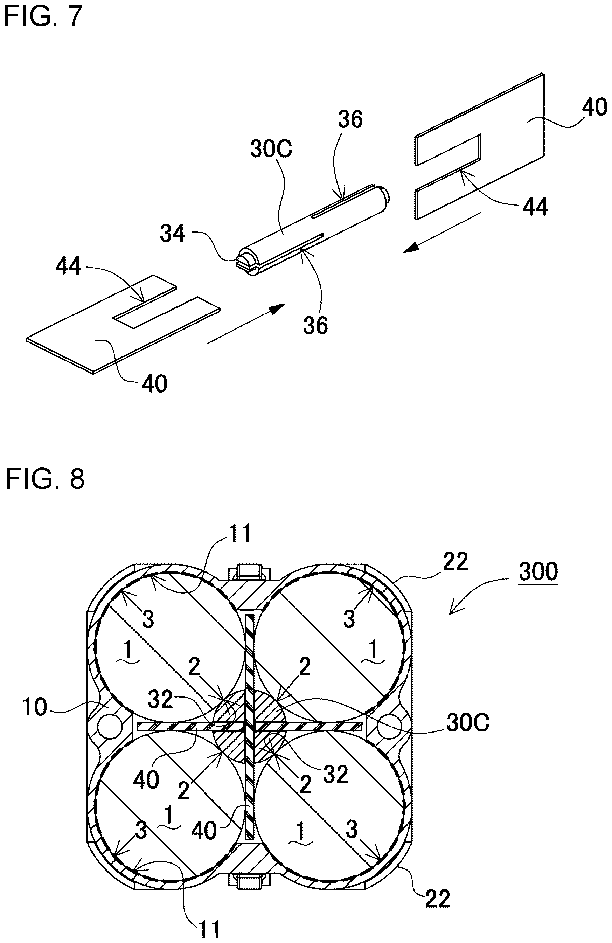

In the configuration described above, the adjacent secondary battery cells are separated from each other across a space in between. However, the present disclosure may not be limited to such configurations, and a partition wall may be provided between the adjacent secondary battery cells. An example of such modification is shown in FIGS. 6-8 as a battery pack 300 according to Exemplary Embodiment 3. FIG. 6 is a perspective view of a rod body 30C of the battery pack 300 according to Embodiment 3. FIG. 7 is an exploded perspective view of the rod body 30C shown in FIG. 6. FIG. 8 is a cross sectional view of the battery pack 300 according to Embodiment In these figures, components commonly identical to each other in Embodiments 1-3 are denoted by the same reference numerals, and their detailed explanation will be omitted.

### Partition Plate 40

As shown in FIG. 6, the battery pack 300 further includes partition plates 40 each being provided on the rod body 30 and inserted in a space between adjacent two secondary battery cells 1 out of the plurality of secondary battery cells 1 adjacent to each other. In this configuration, the partition plate 40 isolates the adjacent secondary battery cells 1 from each other to enhance the insulation. Further, the partition plate 40 may be made of a material having a heat-resistance to prevent transmission of a high temperature heat generated by any chance at one secondary battery cell to an adjacent secondary battery cell. Materials that can preferably be used for the partition plate 40 include heat-resistive materials, such as an aggregate of non-organic fibers and mineral materials like mica, that are superior in the fire resistance and heat resistance. Mica, which is high in the fire resistance and heat resistance, superior in the insulation, and inexpensive, is preferable as a material with a heat-resistance and an insulation.

The length of the partition plate 40 may be substantially identical to or slightly shorter than the length of the rod body 30C. Since the rod body 30C has the structure for fixing ends of the rod body to the end plates 20 or includes the protrusions 34, the rod body 30C tends to be slightly longer. Similarly, a structure for fixing the partition plate 40 to each of the end plates 20 may be provided. For example, each of the end plates may have a slit therein into which an end edge of the partition plate is inserted. In this case, the partition plate also becomes slightly longer.

Each partition plate 40 has a slit 44 therein to hold the side surface of the rod body 30C in the slit 44 as shown in the perspective view of FIG. 7. In this example, slit 44 is formed in the center on one shorter side of the partition plate 40 which thus has a U-shape.

The rod body 30C has grooves 36 into which edges of the partition plate 40 along the slit 44 is inserted. In this example, each of the grooves 36 extends from a corresponding one of the opposite ends to the middle of the rod body 30C. The length of each groove 36 is equal to the depth of the slit 44. Further, the grooves 36 are formed respectively on the left and right sides on the side surface of the rod body 30C and continuously connected at the respective end surfaces of the rod body 30C. In other words, the grooves 36 are formed so that the trajectory of the grooves has a U-shape. In addition, the grooves 36 continuously extending through one of the end surfaces of the rod body 30C and the grooves 36 continuously extending through the other of the end surfaces of the rod body 30C are formed such that their respective U-shaped planes along the grooves cross perpendicularly to each other. This configuration provides a holding structure for holding the secondary battery cells 1 by a simple structure of a combination of the partition plates 40 and the rod body 30C without using the conventional cell holder, which holds secondary battery cells 1 separately from one another. Further, in the configuration in which the groove 36 extends continuously at the end surface of the rod body 30C, the groove 36 is formed also in the protrusion 34 formed on the end surface. The protrusion 34 thus divided by the groove 36 provides an additional effect that the protrusion 34 has an elasticity so as to increase a connecting force when the protrusion 34 is inserted into the rod fixing hole.

Each of the grooves 30C extending respectively from the right and left end surfaces of the rod body 30C may preferably have a length longer than 1/2 of the length of the rod body 30C. In other words, the grooves 30C extending respectively from the right and left end surfaces of the rod body 30C may preferably extend to partially overlap each other. In this configuration, the length of the connecting portions of the partition plate 40 and the rod body 30C becomes more than a half the length of the rod body 30C, thereby enhancing the connecting force.

In the example shown in FIG. 7, the outer shapes of the two partition plates 40 are identical to each other, and the grooves 36 provided on the right and left sides of the rod body 30C have the same depth and length. Therefore, the partition plates 40 may be commonly prepared so that they can be used even when the right and left sides of the rod body 30C are exchanged. This configuration enhances efficiency of the production process and assembling works.

### Exemplary Embodiment 4

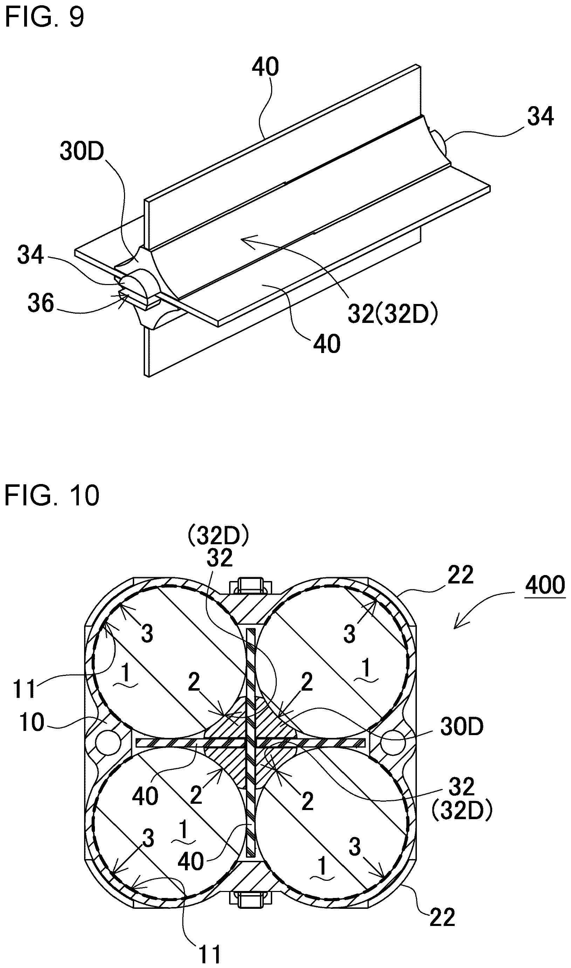

The rod body with the partition plates 40 may have a concave portion in the rod contact area similarly to the rod body according to Embodiment 2. An example of such modification is shown in FIGS. 9 and 10 as a battery pack 400 according to Exemplary Embodiment 4. FIG. 9 is a perspective view of a rod body 30D of the battery pack 400 according to Embodiment 4. FIG. 10 is a cross sectional view of the battery pack 400 according to Embodiment 4. In these figures also, components commonly in Embodiments 1-4 are denoted by the same reference numerals, and their detailed explanation will be omitted.

The rod body 30D shown in FIG. 9 has, as the rod contact area 32, a concave portion 32D curved inward depending on the shape of the cylindrical side surface of the secondary battery cell 1. The slits are provided at an area different from the concave portion 32D. In this example, grooves 36 are formed as seen in a cruciform with respect to a cross section of the rod body 30D, and each of the rod contact areas 32 is formed between adjacent two grooves 36. In this configuration, the secondary battery cells 1 are stably held by the rod-body contact areas 32, as well as to physically isolate each of the secondary battery cells 1 from the others to secure the insulation.

### Exemplary Embodiment 5

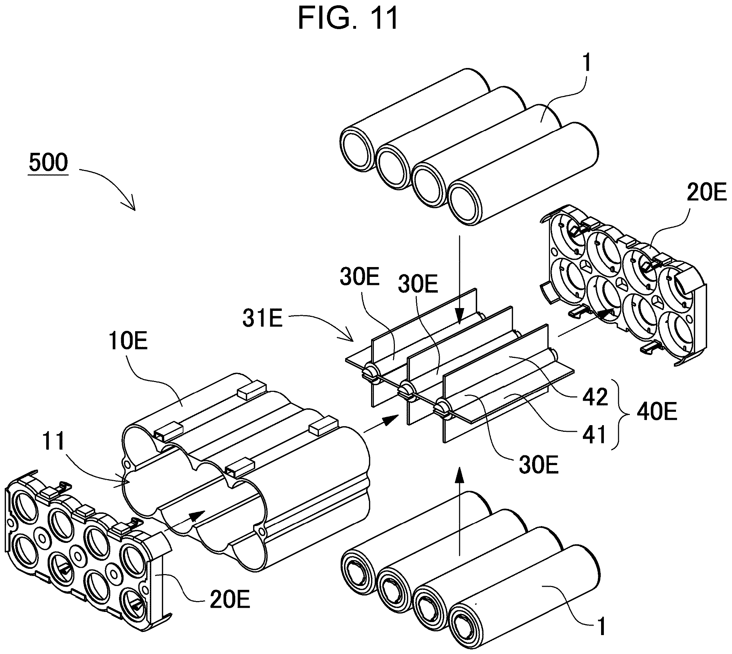

A single rod body is used in the examples described above, the present disclosure may not be limited to the structure using a single rod body, and may have a structure using plural rod bodies. In the battery pack including plural rod bodies, the rod bodies are linked to one another with a partition plate. An example of such modification is shown by an exploded perspective view in FIG. 11 as a battery pack 500 according to Exemplary Embodiment 5. The battery pack 500 shown in FIG. 11 includes a housing 10E, end plates 20E, a rod-body-link structure 31E, and secondary battery cells 1. In this figure, components common in Embodiments 1-5 are denoted by same reference numerals, and their detailed explanation will be omitted.

The rod-body-link structure 31E shown in FIG. 11 includes three rod bodies 30E linked through partition plates 40E. In this example, eight secondary battery cells 1 are held such that two stages each including four secondary battery cells 1 are stacked. The partition plates 40E include two kinds of partition plates, i.e., a partition plate 41 horizontally extending and partition plates 42 vertically extending. The partition plate 41 horizontally extending has three slits 44 formed at an end edge of the plate to link three rod bodies 30E to one another. The partition plates 42 vertically extending and each rod body 30E may be the same as those used in Embodiment 3. In this configuration, the partition plates 40E isolate each of the secondary battery cells 1 from the others and fixes rod bodies 30E.

### Exemplary Embodiment 6

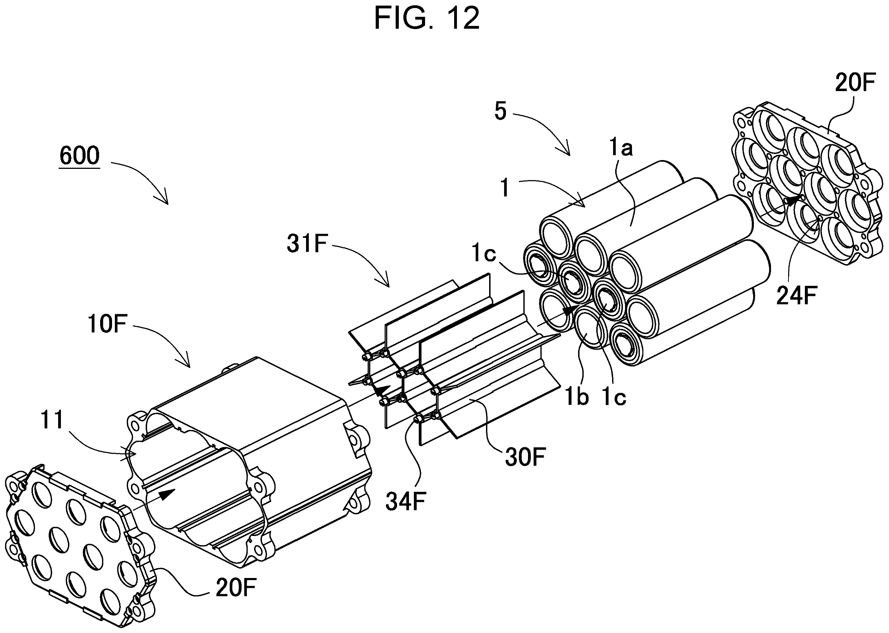

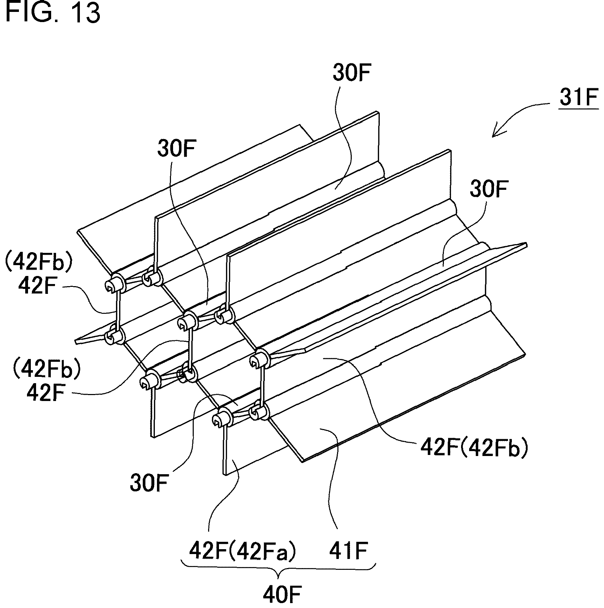

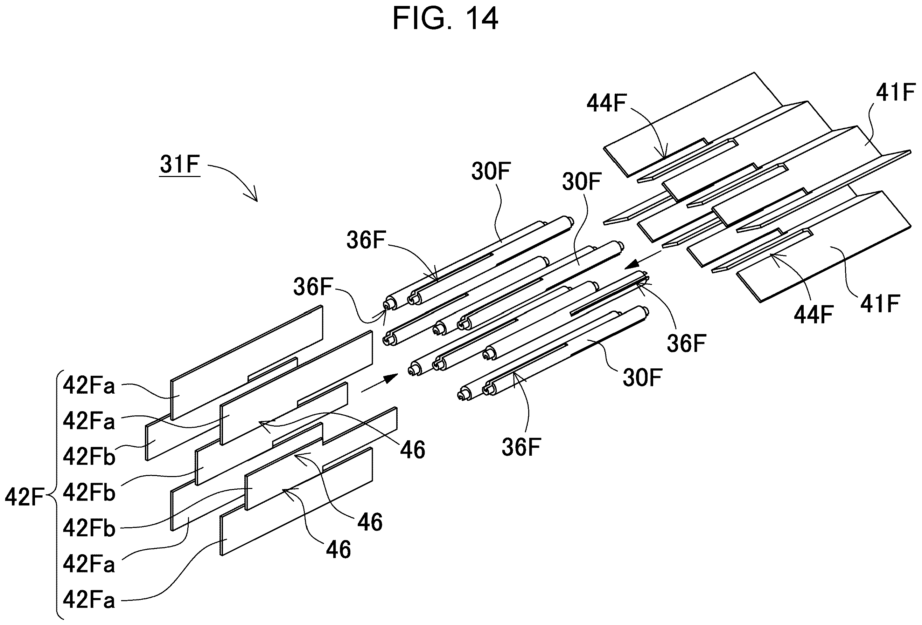

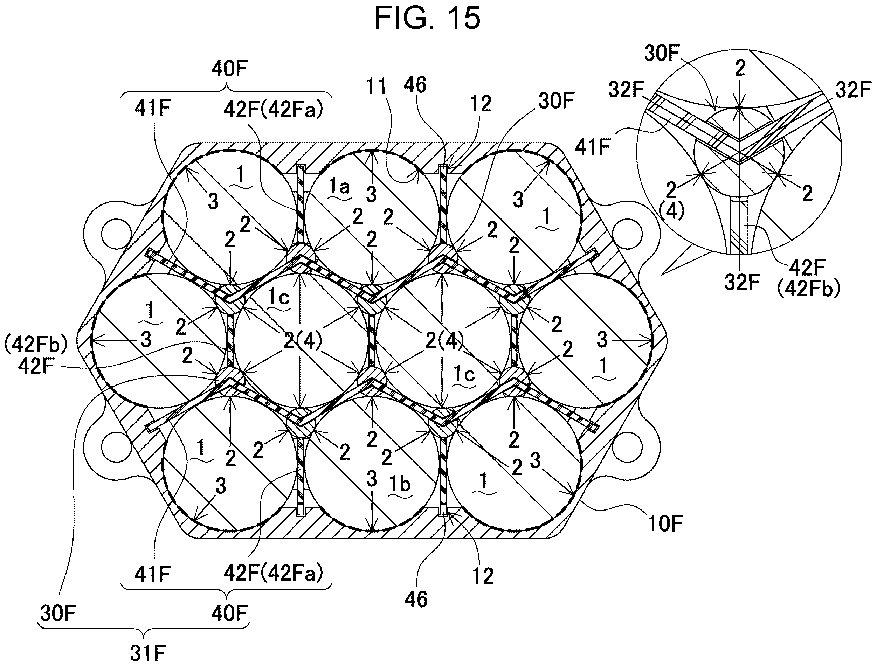

In the above-described example, secondary battery cells are stacked in two stages. However, the present disclosure may not be limited to such configuration, and may have a configuration in which the secondary battery cells are stacked in three or more stages. A structure in which the secondary battery cells are stacked is referred to as a cell stack. The number of the stages constituting the cell stack and the number of secondary battery cells arranged in each stage may be appropriately determined. The pattern of stacking the secondary battery cells in multiple stages may be a grid pattern, a matrix pattern, or a staggered pattern in which the centers of the end surfaces of the secondary battery cells adjacent to each other in the vertical direction are shifted from each other. For example, the secondary battery cells may be arranged in two stages such that the centers of the end surfaces of the secondary battery cells in one of the upper and lower stages are offset from those in the other of the upper and lower stages to reduce the thickness of the cell stack. Further, in this configuration, each of the partition plates may be disposed between respective adjacent secondary battery cells. An example of such modification is shown in FIGS. 12-15 as a battery pack 600 according to Exemplary Embodiment 6. FIG. 12 is an exploded perspective view of the battery pack 600 according to Embodiment 6. FIG. 13 is a perspective view of a rod body 30F shown in FIG. 12. FIG. 14 is an exploded perspective view of the rod body 30F shown in FIG. 13. FIG. 15 is a cross sectional view of the battery pack 600 according to Embodiment 6 with an enlarged view of a principal portion. The battery pack 600 shown in these figures includes a housing 10F, end plates 20F, a rod-body-link structure 31F, and secondary battery cells 1. In these figures, components common in Embodiments 1-6 are denoted by the same reference numerals, and their detailed explanation will be omitted.

In the example shown in FIGS. 12 and 15, the housing 10F has a hexagonal cross section. This example holds ten secondary battery cells 1 in total by stacking the secondary battery cells 1 in a staggered arrangement in three stages respectively containing three, four and three secondary battery cells. In this example, the number of the stages and the number of the secondary battery cells in each stage may be appropriately modified.

The rod-body-link structure 31F including rod bodies 30F linked to one another with and connected to the partition plates 40F has a hexagonal cross section of a honeycomb structure, as shown in FIGS. 12 and 13. In the cell stack 5 constituted by secondary battery cells 1 stacked in multiple stages, each of the secondary battery cells 1 located at the outer peripheral part of the cell stack 5 is held by a rod-body contact area 32 of a rod body 30F and a housing contact area 11 of the housing 10F. Each secondary battery cell 1 contacts and is held at plural positions with plural rod bodies 30F. In the example shown in FIG. 15, among the secondary battery cells 1 located at the outer peripheral part of the cell stack 5, secondary battery cell 1 positioned at a vertex of the hexagonal cross-section of the housing 10F is held by two rod bodies 30F and the inner surface of the housing 10F. In other words, each of these secondary battery cells 1 is held by one housing contact area 11 and two rod-body contact areas 32. On the other hand, each secondary battery cell 1 that is not located at a vertex of the hexagonal cross-section of the housing 10F, or each of the two secondary battery cells including the upper center secondary battery cell 1a and the lower center secondary battery cell 1b in the example shown in FIG. 15, is held by three rod bodies 30F and the inner surface of the housing 10F. Since the example shown in FIG. 15 is provided with partition plates 40F, each secondary battery cell 1 is held also on portions of the cell contacting the partition plates 40F.

On the other hand, each of secondary battery cells 1c surrounded by the secondary battery cells 1 located at the outer peripheral part of the cell stack 5 is held by rod-body contact areas 32F of rod bodies 30F as shown in the enlarged view of the principal portion in FIG. 15. In other words, these secondary battery cells 1c are not held by the inner surface of the housing 10F. In the example shown in FIG. 15, each of the two secondary battery cells 1c located in the middle of the middle stage is held by six rod bodies 30F surrounding the secondary battery cell 1c. Here, in order to be distinguished from the first contact area on which the secondary battery cell 1c contacts one rod body 30F, each of the other contact areas on which the secondary battery cell 1c contacts the other rod bodies 30F is referred to as a third contact area 4. In the example shown in FIG. 15, each of the two secondary battery cells 1c located in the middle of the middle stage is held by contacting the rod-body contact area 32 of one rod body 30F at the first contact area 2 and contacting the rod-body contact area 32F of the other rod body 30F at the third contact area 4. In this example, each secondary battery cell 1c is surrounded and held by the rod-body contact areas of the six rod bodies 30F. Either one of the six areas contacting the six rod-body contact areas 32F is the first contact area, and either one of the remaining five area is the third contact area 4.

The rod-body-link structure 31F includes a combination of plural rod bodies 30F and plural partition plates 40F as shown in the perspective view in FIG. 13 and the exploded perspective view in FIG. 14. Since the secondary battery cells 1 are arranged in an offset pattern, differently from the example shown in FIGS. 6 and 7, three secondary battery cells 1 are disposed around each rod body 30F. More specifically, each rod body 30F has slits 36F in which partition plates 40F are inserted. In this example, however, differently from the example shown in FIGS. 6 and 7, an angle formed by each slit 36F and the adjacent slit 36F on the cross section of the rod shape is not 90°, but is 120°. In the example shown in FIG. 14, each rod body 30F is provided on the right part of the rod body with a slit for inserting the partition plate 42F vertically extending and on the left part of the rod body with a groove 36F for inserting the partition plate 41F horizontally extending.

Further, each rod body 30F is provided on each of its opposite ends with a protrusion 34F. The protrusions 34F inserted respectively into the rod fixing portions 24F formed on the both end plates 20F allows the rod body 30F to be fixed at both ends in the longitudinal direction with the end plates 20F. In this example, since the rod bodies 30F are combined with the partition plates 40F to constitute the rod-body-link structure 31F, each rod body 30F does not rotate about the axial direction. Therefore, the protrusion 34F of the rod body 30F may have a circular columnar shape, and the rod fixing portion 24F of the end plate 20F may have a circular shape corresponding to the circular columnar shape of the protrusion 34F.

### Partition Plate 40F

The partition plates 40F are classified into vertically extending partition plates 42F and horizontally extending partition plates 41F. The partition plates 42F vertically extending include partition plates 42Fa vertically extending and partition plates 42Fb connecting adjacent rod bodies 30F to one another in the middle. In this configuration, the partition plate 42F vertically extending cannot be configured to straddle plural rod bodies 30F. Instead of forming the slit 44 as shown in FIG. 7, a connecting piece 46 is pressed into the groove 36F of the rod body 30F. The connecting piece 46 projects in stepwise from one side extending in the longitudinal direction of the partition plate 42Fa vertically extending. The partition plate 42Fa vertically extending has an L-shape.

The partition plate 42Fb connecting adjacent rod bodies 30F to one another in the middle has connecting pieces 46 respectively projecting from the both sides extending in the longitudinal direction. Therefore, the partition plate 42Fb connecting adjacent rod bodies 30F in the middle has a T-shape. The width, or the length in the lateral direction, of the partition plate 42Fb connecting adjacent rod bodies 30F in the middle corresponds to the distance between the adjacent rod bodies 30F to be connected. On the other hand, the partition plate 42Fa vertically extending is not subject to such restriction. In the case where an edge of the partition plate 42Fa vertically extending is inserted into a housing groove 12 formed in the inner surface of the housing 10F as shown in FIG. 15, the dimensions of the partition plate 42Fa vertically extending may be determined depending on the depth of the housing groove12 and the thickness of the inner surface of the housing 10F.

Each of the partition plates 41F horizontally extending is not a flat plate, but meanders alternately in opposite directions to be in a serrated shape. Two partition plates 41F horizontally extending have shapes that are mirror symmetrical to each other. Each partition plate 41F horizontally extending meanders alternately by 120° to form alternately appearing ridge folds and valley folds. Further, each partition plate 41F horizontally extending is provided on each fold portion with a slit 44F having a U-shape so that the partition plate 41F horizontally extending may be inserted into grooves 36F of the rod body 30F.

The exploded structure of the partition plates 40F to constitute the rod-body-link structure 31F shown in FIG. 13 is merely an example. The structure of the partition plates may not be limited to the shown example. For example, the plate horizontally extending may be divided to individual pieces similarly to the partition plate connecting the adjacent rod bodies in the middle. As another modification, the partition plates vertically extending may be connected to have a structure with a corrugated cross-section, and the partition plate horizontally extending may be divided to individual pieces.

Each rod body 30F surrounded by three secondary battery cells 1 that are arranged in a staggered pattern have a cross section that larger areas than the inscribed circle of a gap produced inside the space surrounded by the three secondary battery cells arranged in the staggered pattern so that the secondary battery cells 1 are separated from one another. In this design, the secondary battery cells 1 are held at positions separated from one another. The partition plates 40F on the rod body 30F, as shown in FIG. 15, allows the thickness of each partition plate 40F to be adjusted such that the partition plate 40F may be provided between the secondary battery cells 1. The diameter of the rod body 30F and the thickness of the partition plate 40F may preferably be determined depending on the diameter of the secondary battery cell 1 so that both the rod-body contact area 32 of the rod body 30F and the partition plate 40F can contact the cylindrical side surface of each secondary battery cell 1 while the rod body 30F is disposed between the secondary battery cells 1 arranged in the staggered pattern. The rod body 30F may be provided at the rod-body contact area 32 with a concave portion as described above. In this case, i.e., in the structure in which the partition plates are provided, the thickness of the partition plate, the diameter of the rod body, and the depth of the concave portion are determined such that the cylindrical side surface of the secondary battery cell contacts the partition plate while the secondary battery cell contacts the concave portion of the rod-body contact area.

### Exemplary Embodiment 7

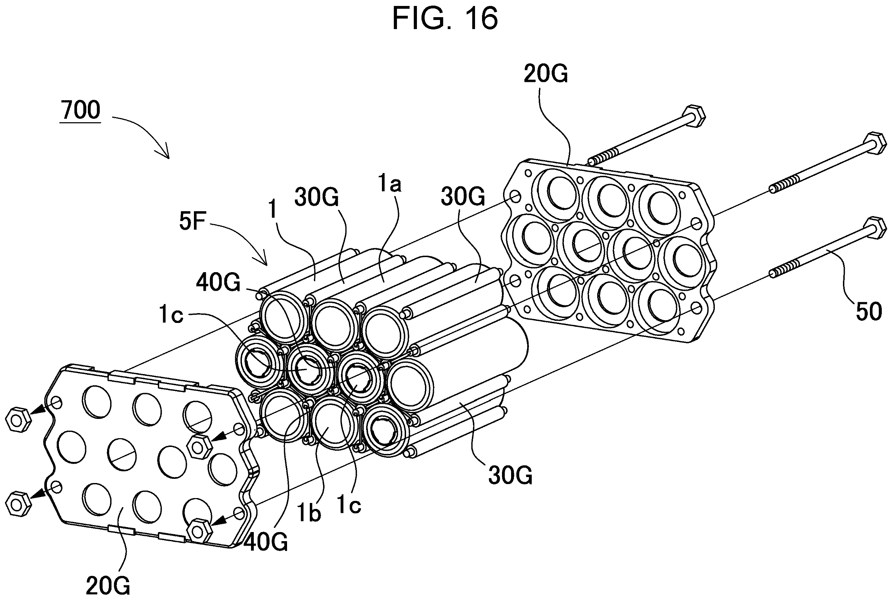

In the examples described above, the secondary battery cells are held by the side surface of the rod body and the inner surface of the housing. As another configuration for holding the secondary battery cells, the secondary battery cells may be held only by the rod bodies without the inner surface of the housing. That is, in the same manner as the configuration of holding the secondary battery cells located in the middle of the cell stack 5 shown in the above-described Embodiment 6, such a configuration may be used that all secondary battery cells in the cell stack are held only by the rod bodies. An example of such modification is shown in FIG. 16 as a battery pack 700 according to Exemplary Embodiment 7. Components common in Embodiments 1-7 are denoted by the same reference numerals, and their detailed explanation will be omitted.

The battery pack 700 shown in FIG. 16 includes a cell stack 5F including secondary battery cells 1 stacked, rod bodies 30G, and a pair of end plates 20G. The pair of end plates 20G hold both ends of the cell stack 5F and both ends of each of rod bodies 30G. The pair of end plates 20G are connected to each other with fixing members 50, such as bolts. Each secondary battery cell 1 has, on a part of its cylindrical side surface, a first contact area 2, and a third contact area 4 that is different from the first contact area 2. While secondary battery cells 1 and rod bodies 30G are accommodated in the storage space, each secondary battery cell 1 contacts the rod-body contact area 32 of one rod body 30G at the first contact area 2, and contacts the rod-body contact area 32 of another rod body 30G at the third contact area 4 to be sandwiched between and held by the two rod bodies 30G.

In the example shown in FIG. 16, partition plates 40G similar to those in the example shown in, for example, FIG. 12 are provided. Each of the partition plates 40G connects adjacent rod bodies 30G to each other and divides the storage space accommodating the secondary battery cells 1 to isolate the adjacent secondary battery cells 1 from each other. Partition plates 40G may contact the cylindrical side surfaces of the secondary battery cells 1 to securely hold the secondary battery cells 1. The partition plates 40G may be held by the end plates 20G to enhance the stability. A holding structure that holds the secondary battery cells 1 by the rod bodies 30G without using the housing is provided. Further, this configuration may be combined with the partition plates 40G to isolate each of the secondary battery cells 1 from the others. This configuration thus provides a holding structure that holds the secondary battery cells 1 in a simple configuration in place of the conventional cell holder.

### Exemplary Embodiment 8

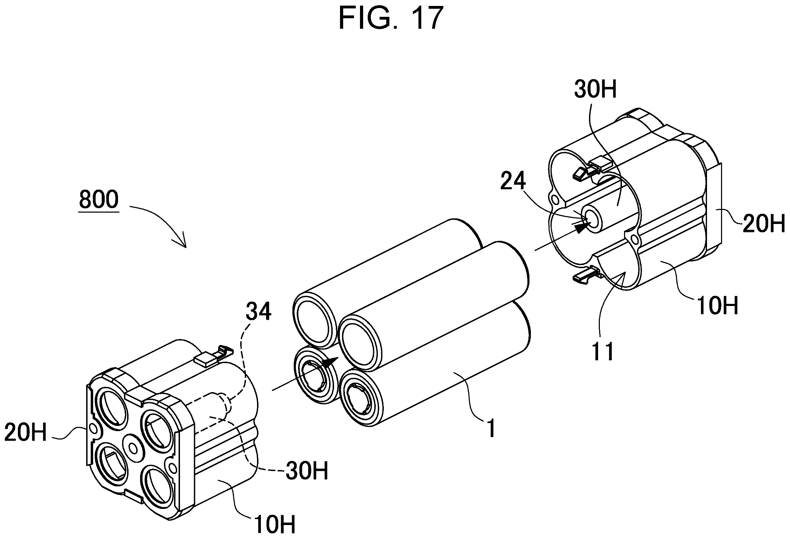

In the configurations described in the foregoing examples, the end plates and the rod body are constituted by members separate from each other. However, the present disclosure may not be limited to such examples, and may be configured such that the end plates and the rod body are formed unitarily with one another. An example of such modification is shown in an exploded perspective view of FIG. 17 as a battery pack 800 according to Exemplary Embodiment 8. In this figure, components common in Embodiments 1-8 are denoted by the same reference numerals, and their detailed explanation will be omitted. In the battery pack 800 shown in FIG. 17, a pair of rod bodies 30H are respectively fixed to a pair of end plates 20H. Each end plate 20H may preferably be formed unitarily with a corresponding unit 30H. However, the end plate 20H and the rod body 30H may be constituted by members different form each other and adhered to each other with, e.g., an adhesive. Two rod bodies 30H having lengths which are half the length of the secondary battery cell 1 may be combined to constitute one rod body. One rod body 30H on the near side in the figure is provided at its end with a protrusion 34, and the other rod body 30H on the far side in the figure is provided at the center of its end with a rod fixing portion 24 for holding the protrusion 34 of the opposing rod body 30H. This configuration allows the secondary battery cells 1 to be held around the rod body 30H. This configuration provides advantages to reduce the number of components and can reduce the assembling works. The present disclosure may not be limited to the configuration in which the pair of rod bodies are respectively extended from the pair of end plates. As another modification, a single rod body may be fixed to one of the pair of end plates, and connected at its end to the other of the pair of end plates. Other embodiments described above may be modified to form the rod body and the end plate unitarily such that the rod body extends from the end plate.

The housing 10 and the end plates 20 are constituted by separate members in the above-described Embodiments 1-7. However, the present disclosure may not be limited to such configurations, and the housing and the end plates may be formed unitarily with each other. For example, in the battery pack 800 according to Embodiment 8 shown in the exploded perspective view of FIG. 17, the housing 10H is formed unitarily with the end plates 20H. In this case, the housing may be divided into two, or one housing 10H and the other housing 10H, and each of the two housings 10H may be formed unitarily with the corresponding one of the two end plates 20H.

In the examples described hereinabove, the plurality of cylindrical secondary battery cells are stacked in such positions that their cylindrical side surfaces overlap one another to constitute the cell stack. However, the secondary battery cells may be held in such positions that they are aligned in the longitudinal direction.

### INDUSTRIAL APPLICABILITY

A battery pack according to the present disclosure may be favorably applicable to power sources for vehicles, such as electric power-assisted bicycles and electric carts. The battery pack according to the present disclosure may be appropriately applicable to power sources for portable electrically driven devices, such as electric cleaners and electric power tools.

### REFERENCE MARKS IN THE DRAWINGS

100, 200, 300, 400, 500, 600, 700, 800 battery pack
1 secondary battery cell
1a secondary battery cell in the middle of the upper stage
1b secondary battery cell in the middle of the lower stage
1c secondary battery cell located inside
2 first contact area
3 second contact area
4 third contact area
5, 5F cell stack
10 housing
11 housing contact area
12 housing groove
20, 20E, 20F, 20G, 20H end plate
22 claw
24 rod fixing portion
26 engaging recess
30, 30B, 30C, 30D, 30E, 30F, 30G, 30H rod body
31E, 31F rod-body-link structure
32 rod-body contact area
32B, 32D recess
34 protrusion
36, 36F groove
40, 40E, 40F, 40G partition plate
41, 41F horizontally extending partition plate
42, 42F vertically extending partition plate
42Fa vertically extending partition plate
42Fb partition plate connecting adjacent rod bodies in the middle
44, 44F slit
46 connecting piece
50 fixing member
900 battery pack
901 secondary battery cell
920 end plate
930 cell holder

## Claims

1. A battery pack comprising:
a plurality of secondary battery cells, each of the plurality of second battery cells having a cylindrical shape and including a first contact area and a second contact area which are on a side surface of the cylindrical shape thereof and which are different from each other;
at least one rod body having a rod shape extending in one direction, the at least one rod body has a side surface, a part of the side surface of the at least one rod body contacting the first contact area of the each of the plurality of secondary battery cells; and
a housing having a storage space therein that accommodating the plurality of secondary battery cells and the at least one rod body therein, a part of an inner surface of the storage space contacting the second contact area of the each of the plurality of secondary battery cells,
wherein, while the plurality of secondary battery cells and the at least one rod body are accommodated in the storage space of the housing, at least one of the plurality of secondary battery cells is held at the first contact area of the at least one of the plurality of secondary battery cells which contacts a part of the side surface of the at least one rod body and at the second contact area of the at least one of the plurality of secondary battery cells which contacts a part of the inner surface of the storage space of the housing.

2. The battery pack according to claim 1, wherein the at least one of the plurality of secondary battery cells is disposed such that the first contact area of the at least one of the plurality of secondary battery cells is opposite to the second contact area of the at least one of the plurality of secondary battery cells across a center of a circular cross section of the at least one of the plurality of secondary battery cells.

3. The battery pack according to claim 1 or 2, wherein the at least one rod body includes a concave portion on the side surface of the rod shape contacting the first contact area, the concave portion being curved inward along a shape of a cylindrical side surface of the at least one of the plurality of secondary battery cells.

4. The battery pack according to claim 1 or 2,
wherein the at least one rod body has a plurality of concave portions on the side surface of the at least one rod body, a corresponding one of plurality of concave portions contacting the first contact area of the each of the plurality of secondary battery cells, the corresponding one of the plurality of concave portions being curved inward along a shape of a cylindrical side surface of the each of the plurality of secondary battery cells, and
wherein the plurality of concave portions are arranged at constant intervals along a circumference of a cross section of the at least one rod body.

5. The battery pack according to any one of claims 1 to 4, wherein a part of the inner surface of the storage space of the housing contacting the second contact area of the at least one of the plurality of secondary battery cells has a curved surface curved along the cylindrical side surface of the at least one of the plurality of secondary battery cells.

6. The battery pack according to any one of claims 1 to 5,
wherein the housing has a tubular shape extending in a longitudinal direction of the plurality of secondary battery cells and having an open end, and
wherein the battery pack further comprises an end plate closing the open end of the housing.

7. The battery pack according to claim 6, wherein the end plate includes:
a rod fixing portion holding the at least one rod body; and
a plurality of engaging recesses engaged with ends of the plurality of secondary battery cells to hold the plurality of secondary battery cells, respectively.

8. The battery pack according to claim 6, wherein the at least one rod body is formed unitarily with the end plate.

9. The battery pack according to claim 6,
wherein the at least one rod body includes a protrusion engaged with the end plate,
wherein the end plate includes a rod fixing portion engaged with the protrusion of the at least one rod body, and
wherein the protrusion of the at least one rod body has a cross section asymmetrical about a center of the cross section.

10. The battery pack according to any one of claims 1 to 9, further comprising a partition plate provided on the at least one rod body, the at least one rod body being inserted between adjacent battery cells out of the plurality of secondary battery cells adjacent to each other across respective side surfaces of the adjacent battery cells.

11. The battery pack according to claim 10,
wherein the partition plate has a slit therein holding the side surface of the at least one rod body in the slit, and
wherein the at least one rod body has a groove in which an end of the partition plate at the slit is inserted.

12. The battery pack according to any one of claims 1 to 11, wherein, while the plurality of secondary battery cells are accommodated in the storage space of the housing, at least half a circumference length of a cross section of the each of the plurality of secondary battery cells contacts the inner surface of the storage space of the housing as the second contact area.

13. The battery pack according to any one of claims 1 to 12,
wherein three or more secondary battery cells out of the plurality of secondary battery cells are arranged adjacent to one another, and
wherein the at least one rod body is surrounded by the three or more secondary battery cells and holds the three or more secondary battery cells with the side surface of the at least one rod body.

14. The battery pack according to any one of claims 1 to 13, wherein each of all the plurality of secondary battery cells is held at the first contact area contacting the side surface of the at least one rod body and at the second contact area contacting the inner surface of the storage space of the housing.

15. The battery pack according to any one of claims 1 to 14,
wherein the at least one rod body comprises a plurality of rod bodies including one rod body and another rod body,
wherein one secondary battery cell out of the plurality of secondary battery cells is held at the first contact area contacting a part of a side surface of the one rod body and at the second contact area contacting a part of the inner surface of the storage space of the housing, and
wherein another secondary battery cell out of the plurality of secondary battery cells is held at the first contact area contacting a part of the side surface of the one rod body and at a third contact area contacting a part of a side surface of the another rod body.

16. A battery pack comprising:
a plurality of secondary battery cells, each of the plurality of second battery cells having a cylindrical shape and including a first contact area and a third contact area which are on a side surface of the cylindrical shape thereof and which are different from each other; and
rod bodies having rod shapes extending in one direction, the rod bodies have side surfaces contacting the first contact area of the each of the plurality of secondary battery cells,
wherein, while the plurality of secondary battery cells are held by the rod bodies, one of the plurality of secondary battery cells is held at the first contact area which contacts a part of a side surface of one of the rod bodies and at the third contact area which contacts a part of a side surface of another of the rod bodies.
